# EUROPEAN PATENT APPLICATION

(11) **EP 4 489 158 A2**
(43) Date of publication of application: **08.01.2025**
(21) Application number: 24177882.8
(22) Date of filing: 24.05.2024
(51) Int. Cl.: H01M 10/04, H01M 10/0587

(54) **METHOD OF PRODUCING ELECTRODE ASSEMBLY FOR NON-AQUEOUS ELECTROLYTE SECONDARY BATTERY, ELECTRODE ASSEMBLY, AND BATTERY**

(30) Priority: 03.07.2023 JP 2023109073
(71) Applicant: Prime Planet Energy & Solutions, Inc., Chuo-ku Tokyo 103-0022 (JP)
(72) Inventor: TANNO, Tomohiro, Tokyo, 103-0022 (JP); NISHIDE, Daisuke, Tokyo, 103-0022 (JP)
(74) Representative: Kuhnen & Wacker Patent- und Rechtsanwaltsbüro PartG mbB

(57) **Abstract**

The present disclosure relates to a method of producing an electrode assembly (50) for a non-aqueous electrolyte secondary battery, the method comprising: a preparation step that involves preparing a positive electrode plate (10), a negative electrode plate (20), and a separator (30), in which the separator (30) comprises a base material and an adhesive layer, and the adhesive layer is placed on at least one side of the base material and includes an adhesion resin; a stacking step that involves obtaining a stack (40) including the positive electrode plate (10), the separator (30), and the negative electrode plate (20), in which the adhesive layer of the separator (30) is placed in contact with at least one of the positive electrode plate (10) and the negative electrode plate (20); and a pressing step that involves pressing the stack (40) at a temperature not higher than a glass transition point of the adhesion resin and at a pressure from 8 to 20 MPa to obtain an electrode assembly (50) for a non-aqueous electrolyte secondary battery, wherein an area ratio of the adhesive layer to the base material in a plan view of the separator (30) is from 10 to 70%.

## Description

### CROSS REFERENCE TO RELATED APPLICATIONS

This nonprovisional application is based on Japanese Patent Application No. 2023-109073 filed on July 3, 2023, with the Japan Patent Office, the entire contents of which are hereby incorporated by reference.

### BACKGROUND OF THE INVENTION

### Field of the Invention

The present disclosure relates to a method of producing an electrode assembly for a non-aqueous electrolyte secondary battery, and it also relates to an electrode assembly for a non-aqueous electrolyte secondary battery and a non-aqueous electrolyte secondary battery including the same.

### Description of the Background Art

Japanese Patent Laying-Open No. 2011-54502 discloses a lithium-ion secondary battery, in which a separator has a base material and an adhesion resin, the adhesion resin becomes adhesive upon heating and is provided on at least one side of the base material, and the separator and at least one of a positive electrode and a negative electrode are formed as a one-piece component with the action of the adhesion resin.

### SUMMARY OF THE INVENTION

In Japanese Patent Laying-Open No. 2011-54502, hot pressing is performed at a relatively high temperature (at a temperature from 60 to 120°C) and, therefore, adhesion force between the electrode plate and the separator is great and electrode assembly formability is enhanced; however, there is a chance that the adhesion force between the electrode plate and the separator can become too great, which can cause degradation of impregnation of the non-aqueous electrolyte solution into the space between the electrode plate and the separator during the production of the non-aqueous electrolyte secondary battery (hereinafter also called the battery). Moreover, in the case where the base material of the separator includes a porous film, pores in the porous film can collapse when the stack is pressed at a relatively high temperature, which can cause degradation of impregnation of the non-aqueous electrolyte solution into the separator.

An object of the present disclosure is to provide an electrode assembly for a non-aqueous electrolyte secondary battery that can exhibit electrode assembly formability as well as liquid-injection characteristics and liquid-impregnation characteristics of non-aqueous electrolyte solution, and also to provide a method of producing the same.

The present disclosure provides a method of producing an electrode assembly for a non-aqueous electrolyte secondary battery (hereinafter also called an electrode assembly), an electrode assembly, and a battery as described below.
[1] A method of producing an electrode assembly for a non-aqueous electrolyte secondary battery, the method comprising:
   a preparation step that involves preparing a positive electrode plate, a negative electrode plate, and a separator, in which the separator comprises a base material and an adhesive layer, and the adhesive layer is placed on at least one side of the base material and includes an adhesion resin;
   a stacking step that involves obtaining a stack including the positive electrode plate, the separator, and the negative electrode plate, in which the adhesive layer of the separator is placed in contact with at least one of the positive electrode plate and the negative electrode plate; and
   a pressing step that involves pressing the stack at a temperature not higher than a glass transition point of the adhesion resin and at a pressure from 8 to 20 MPa to obtain an electrode assembly for a non-aqueous electrolyte secondary battery, wherein
   an area ratio of the adhesive layer to the base material in a plan view of the separator is from 10 to 70%.
[2] The method of producing an electrode assembly for a non-aqueous electrolyte secondary battery according to [1], wherein the base material includes a porous film.
[3] The method of producing an electrode assembly for a non-aqueous electrolyte secondary battery according to [1] or [2], wherein a temperature at which the stack is pressed in the pressing step is from 15 to 35°C.
[4] The method of producing an electrode assembly for a non-aqueous electrolyte secondary battery according to any one of [1] to [3], wherein a duration for which the stack is pressed in the pressing step is not less than 3 seconds and less than 30 seconds.
[5] The method of producing an electrode assembly for a non-aqueous electrolyte secondary battery according to any one of [1] to [4], wherein the separator further comprises a heat-resistant layer, and in the stacking step, the separator is placed in such a manner that a side thereof on which the heat-resistant layer is provided faces the positive electrode plate.
[6] An electrode assembly for a non-aqueous electrolyte secondary battery, the electrode assembly comprising:
   a positive electrode plate;
   a separator; and
   a negative electrode plate, wherein
   the separator comprises a base material and an adhesive layer, in which the base material includes a porous film, and the adhesive layer is placed on at least one side of the base material and includes an adhesion resin,
   an area ratio of the adhesive layer to the base material in a plan view of the separator is from 10 to 70%,
   at least one of the positive electrode plate and the negative electrode plate is placed in contact with the adhesive layer,
   an adhesion force between the base material and at least one of the positive electrode plate and the negative electrode plate placed in contact with the adhesive layer is from 0.2 to 5.0 kN/m, and
   in the porous film, a difference between a porosity of a portion that faces both a positive electrode active material application part and a negative electrode active material application part and a porosity of a portion that does not face at least one of the positive electrode active material application part and the negative electrode active material application part is 8.0% or less.
[7] The electrode assembly for a non-aqueous electrolyte secondary battery according to [6], wherein a glass transition point of the adhesion resin is higher than 35°C.
[8] The electrode assembly for a non-aqueous electrolyte secondary battery according to [6] or [7], wherein
   the separator further comprises a heat-resistant layer, and
   the separator is placed in such a manner that a side thereof on which the heat-resistant layer is provided faces the positive electrode plate.
[9] A non-aqueous electrolyte secondary battery comprising the electrode assembly for a non-aqueous electrolyte secondary battery according to any one of [6] to [8].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic flowchart illustrating a method of producing an electrode assembly.
Fig. 2 is a schematic cross-sectional view illustrating an example of the layered configuration of a stack.
Fig. 3 is a schematic cross-sectional view illustrating an example of the layered configuration of a tubular wound body that is formed of a stack.
Fig. 4 is a schematic cross-sectional view illustrating an example of the layered configuration of a stack assembly that is formed of stacks.
Fig. 5 is a schematic view illustrating an example configuration of a wound-type electrode assembly.
Fig. 6 is a schematic view illustrating an example configuration of a stack-type electrode assembly.
Fig. 7 is a schematic view illustrating an example configuration of a non-aqueous electrolyte secondary battery.

### DESCRIPTION OF THE PREFERRED EMBODIMENTS

In the following, a description will be given of an embodiment of the present disclosure with reference to drawings; however, the below-described embodiment does not limit the scope of the present disclosure. In each drawing below, the scale has been changed as appropriate for the purpose of assisting the understanding about the component(s); therefore, the scale of the component(s) in the drawings may not necessarily coincide with the actual scale of the component(s).

Herein, a singular form also includes its plural meaning, unless otherwise specified. For example, "a particle" may mean not only "one particle" but also "a group of particles (powder, particles)".

### <Method of Producing Electrode Assembly for Non-Aqueous Electrolyte Secondary Battery>

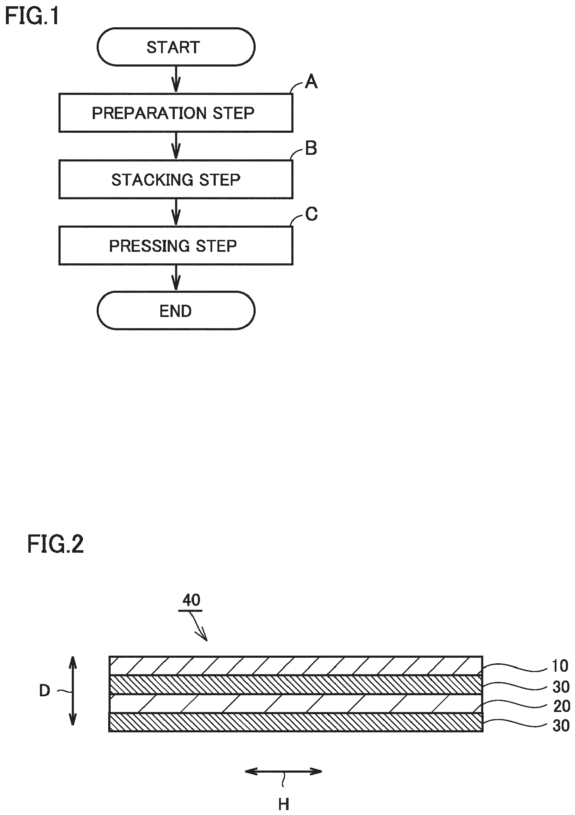

As illustrated in Fig. 1, a method of producing an electrode assembly according to the present disclosure includes a preparation step (A), a stacking step (B), and a pressing step (C). In the preparation step (A), a positive electrode plate, a negative electrode plate, and a separator are prepared. To the positive electrode plate, the negative electrode plate, and the separator, the below description is applied.

In the stacking step (B), a stack that includes the positive electrode plate, the separator, and the negative electrode plate is obtained, in which an adhesive layer of the separator is placed in contact with at least one of the positive electrode plate and the negative electrode plate. With the adhesive layer of the separator thus being placed in contact with at least one of the positive electrode plate and the negative electrode plate, adhesion force between the separator and at least one of the positive electrode plate and the negative electrode plate is enhanced, and electrode assembly formability tends to be enhanced.

In the stacking step (B), at least part of the separator can be interposed between the positive electrode plate and the negative electrode plate to separate the positive electrode plate from the negative electrode plate. In Fig. 2, an example of the layered configuration of a stack is given. A stack 40 illustrated in Fig. 2 includes a positive electrode plate 10, a negative electrode plate 20, and a separator 30. At least part of separator 30 is interposed between positive electrode plate 10 and negative electrode plate 20. Separator 30 separates positive electrode plate 10 from negative electrode plate 20. At least one of positive electrode plate 10 and negative electrode plate 20 is bonded to separator 30. Separator 30 may have an adhesive layer described below, on one side or both sides thereof. When separator 30 has an adhesive layer described below, positive electrode plate 10 and/or negative electrode plate 20 may be bonded to separator 30 via the adhesive layer. In a plan view, each of the positive electrode plate, the negative electrode plate, and the separator may have a square planar shape, or may have a belt-like shape. The plan view of the positive electrode plate, the negative electrode plate, and the separator refers to the view in the thickness direction (the D-axis direction in Fig. 2).

As illustrated in Fig. 2, stack 40 may include two separators 30. Alternatively, stack 40 may include a single separator 30. For example, positive electrode plate 10 may be sandwiched between two separators 30. For example, negative electrode plate 20 may be sandwiched between two separators 30. For example, stack 40 may be formed by stacking separator 30 (a first separator), negative electrode plate 20, separator 30 (a second separator), and positive electrode plate 10 in this order.

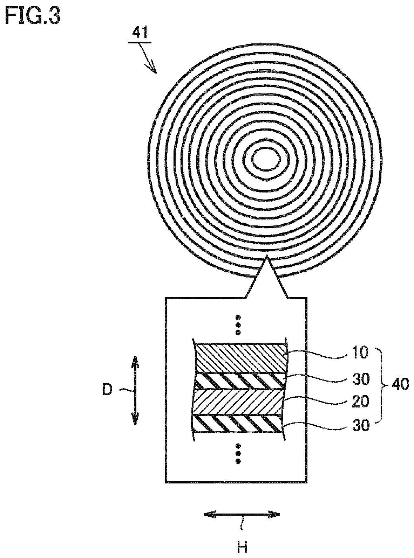

When the electrode assembly is a wound-type one as described below, stack 40 can be wound spirally. For example, the stack can be wound around a cylinder-shaped core to form a tubular wound body 41 as illustrated in Fig. 3.

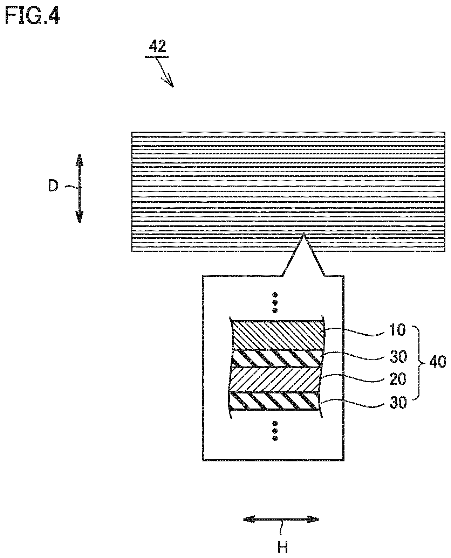

When the electrode assembly is a stack-type one as described below, a plurality of stacks 40 can be stacked on top of one another. The plurality of stacks 40 can be stacked to form a stack assembly 42 as illustrated in Fig. 4.

In the pressing step (C), the stack is pressed at a temperature not higher than the glass transition temperature of the adhesion resin and at a pressure from 8 to 20 MPa, and thereby an electrode assembly for a non-aqueous electrolyte secondary battery is obtained. As a result of pressing the stack at a temperature and a pressure within the above-mentioned range, adhesion between the electrode plate and the separator is achieved to a proper degree during the production of the non-aqueous electrolyte secondary battery, and impregnation of non-aqueous electrolyte solution tends to be enhanced. Moreover, in the case where a base material of the separator includes a porous film, the pores tend not to collapse, and thereby degradation of impregnation of non-aqueous electrolyte solution into the separator tends to be reduced, allowing for enhancement of liquid-injection characteristics and liquid-impregnation characteristics of non-aqueous electrolyte solution. Herein, the pressure in the pressing step (C) is the pressure applied to the pressed surface of the stack (surface pressure).

The temperature at which the stack is pressed may be from 0 to 60°C, for example, and more preferably from 10 to 40°C, further preferably from 15°C to 35°C. The duration for which the stack is pressed may be not less than 1 second and less than 60 seconds, for example, or may be from 3 to 30 seconds, further preferably from 3 to 20 seconds.

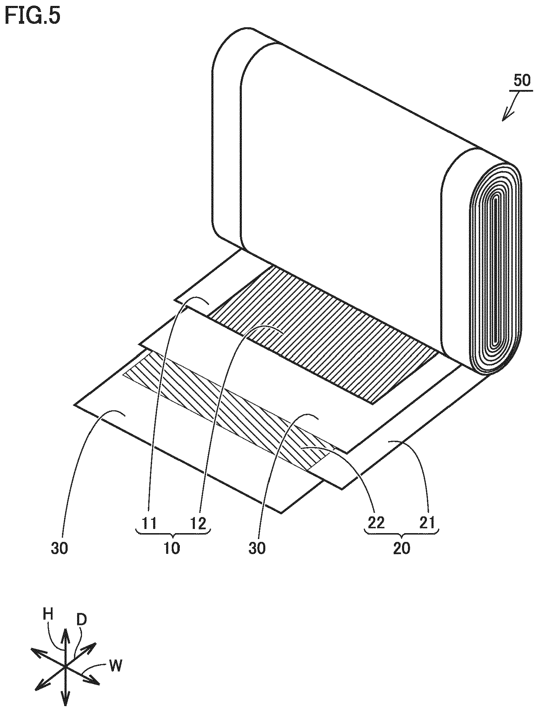

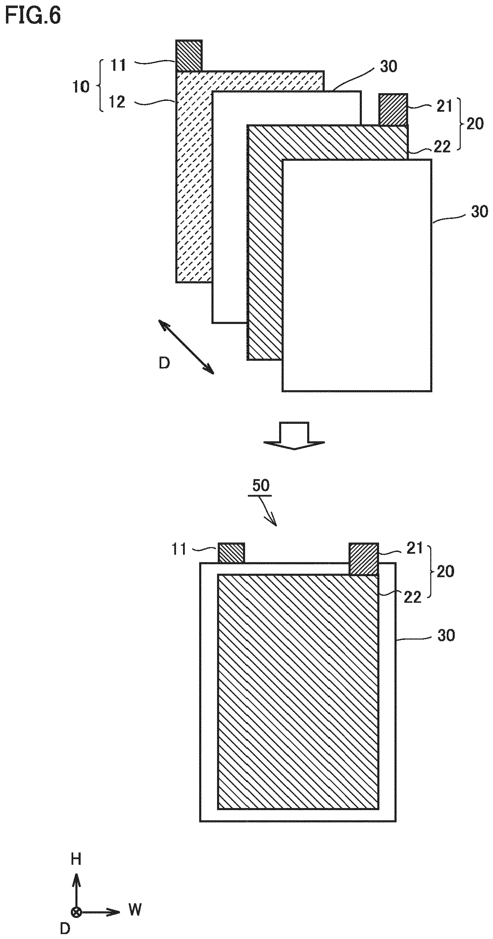

When the electrode assembly is a wound-type one, tubular wound body 41 described above can be pressed in a radial direction to form a flat electrode assembly 50 illustrated in Fig. 5. When the electrode assembly is a stack-type one, stack assembly 42 described above can be pressed to form a stack-type electrode assembly 50 illustrated in Fig. 6.

In a plan view of the separator, the area ratio of the adhesive layer to the base material in the separator (hereinafter also called an adhesive layer area ratio) is from 10 to 70%. With the adhesive layer area ratio falling within the above-mentioned range, adhesion between the electrode plate and the separator is achieved to a proper degree, and liquid-injection characteristics and liquid-impregnation characteristics of non-aqueous electrolyte solution tend to be enhanced. From the viewpoint of liquid-injection characteristics and liquid-impregnation characteristics of non-aqueous electrolyte solution, the adhesive layer area ratio is preferably from 10 to 60%. The adhesive layer area ratio is determined by a method that is described below in the Examples section.

The adhesive layer area ratio can be adjusted to fall within the above-mentioned range, by adjusting the type and the number of the application/arrangement pattern for the adhesive layer formed on the base material, and/or the like, for example. The application/arrangement pattern can be, for example, the one in which an area with the adhesion resin and an area without the adhesion resin are alternately formed in the shape of grooves (a striped pattern), the one in which a plurality of circular areas with the adhesion resin are formed in a discontinuous manner (a dot pattern), and/or the like. The application/arrangement pattern may be an orderly pattern, or may be a random pattern.

The positive electrode plate includes a positive electrode current collector and a positive electrode active material layer. The positive electrode plate can include the positive electrode active material layer on one side or both sides of the positive electrode current collector. As the positive electrode current collector, a sheet or a foil made of a metal such as aluminum, nickel, titanium, and/or stainless steel can be used, for example, and preferably an aluminum foil is used. When an aluminum foil is used as the positive electrode current collector, the thickness may be from 5 µm to 35 µm, for example, and preferably from 7 µm to 20 µm.

The positive electrode active material layer includes a positive electrode active material. The positive electrode active material is not particularly limited, and one, two, or more types selected from those conventionally and typically used as a positive electrode active material for lithium-ion secondary batteries may be used. For example, a lithium composite oxide, a lithium-(transition metal) phosphoric acid compound (LiFePO₄, for example), and/or the like can be preferably used. Examples of the lithium composite oxide include lithium-nickel-based composite oxide, lithium-cobalt-based composite oxide, lithium-manganese-based composite oxide, lithium-nickel-manganese-based composite oxide (LiNi_{0.5}Mn_{1.5}O₄, for example), lithium-nickel-manganese-cobalt-based composite oxide (LiNi_{1/3}Co_{1/3}Mn_{1/3}O₂, for example), and the like.

The positive electrode active material may be positive electrode active material particles. The average particle size of the positive electrode active material particles is not particularly limited, and may be approximately from 0.5 µm to 50 µm, typically from 1 µm to 20 µm.

The positive electrode active material layer may contain a substance other than the positive electrode active material, such as, for example, a conductive material, a binder, and/or the like. As the conductive material, carbon black such as acetylene black (AB), and/or other carbon materials (such as graphite) can be preferably used, for example. As the binder, a fluorine-based binder such as polyvinylidene difluoride (PVdF) and/or polytetrafluoroethylene (PTFE) and/or a rubber-based binder such as styrene-butadiene rubber (SBR) can be preferably used, for example. Moreover, as long as an effect of the present disclosure is not impaired, the positive electrode active material layer may contain a material other than those described above (such as various additives, for example).

Preferably, from the viewpoint of energy density, the content of the positive electrode active material in the positive electrode active material layer (namely, the proportion of the positive electrode active material to the total mass of the positive electrode active material layer) is approximately 70 mass% or more. More preferably, it is from 75 mass% to 99 mass%, for example, and further preferably from 80 mass% to 97 mass%. Moreover, the content of the conductive material in the positive electrode active material layer is preferably from 0.1 mass% to 20 mass%, for example, and more preferably from 1 mass% to 15 mass%. The content of the binder in the positive electrode active material layer is preferably from 0.5 mass% to 15 mass%, for example, and more preferably from 1 mass% to 10 mass%. When various additives such as a thickener are included, the content of the additive(s) in the positive electrode active material layer is preferably 7 mass% or less, for example, and more preferably 5 mass% or less.

The positive electrode plate can be produced by applying a positive electrode slurry that includes, for example, the positive electrode active material, the binder, and a certain amount of dispersion medium, to the positive electrode current collector, and drying, followed by compression. The positive electrode plate may be cut into a certain planar size suitable for the specifications of the electrode.

The negative electrode plate includes a negative electrode current collector and a negative electrode active material layer. The negative electrode plate can include the negative electrode active material layer on one side or both sides of the negative electrode current collector. Examples of the negative electrode current collector include a sheet or a foil that is made of a metal with good electrical conductivity, such as copper, nickel, titanium, and/or stainless steel. As the negative electrode current collector, a copper foil is preferably used. The dimension is not particularly limited, and may be decided as appropriate in accordance with the design of the battery. When a copper foil is used, the thickness may be from 5 µm to 35 µm, for example, and preferably from 7 µm to 20 µm.

The negative electrode active material layer includes a negative electrode active material. As the negative electrode active material, a carbon material such as graphite, hard carbon, and/or soft carbon may be used, for example. The graphite may be either natural graphite or artificial graphite, and may be amorphous-carbon-coated graphite which is graphite coated with an amorphous carbon material.

The negative electrode active material may be negative electrode active material particles. The average particle size of the negative electrode active material particles is not particularly limited, and it is, for example, from 0.1 µm to 50 µm, preferably from 1 µm to 25 µm, more preferably from 5 µm to 20 µm.

The negative electrode active material layer may include a component other than the negative electrode active material, such as, for example, a binder, a thickener, and/or the like. As the binder, styrene-butadiene rubber (SBR), polyvinylidene difluoride (PVDF), and/or the like may be used, for example. As the thickener, carboxymethylcellulose (CMC) and/or the like may be used, for example.

The thickness of the negative electrode active material layer is not particularly limited, and may be, for example, from 10 µm to 300 µm, preferably from 20 µm to 200 µm. The content of the negative electrode active material in the negative electrode active material layer is preferably 90 mass% or more, more preferably from 95 mass% to 99 mass%. The content of the binder in the negative electrode active material layer is preferably from 0.1 mass% to 8 mass%, more preferably from 0.5 mass% to 3 mass%. The content of the thickener in the negative electrode active material layer is preferably from 0.3 mass% to 3 mass%, more preferably from 0.5 mass% to 2 mass%.

The negative electrode plate can be produced by applying a negative electrode slurry that includes, for example, the negative electrode active material, the binder, and a certain amount of dispersion medium, to the negative electrode current collector, and drying, followed by compression. The negative electrode plate may be cut into a certain planar size suitable for the specifications of the electrode.

The separator comprises a base material and an adhesive layer, and the adhesive layer is placed on at least one side of the base material and includes an adhesion resin. The separator is interposed between the positive electrode plate and the negative electrode plate, and is capable of separating the positive electrode plate from the negative electrode plate. The separator is electrically insulating.

The base material can include a porous film. The base material may consist essentially of a porous film, for example. The porous film may be a resin film. The resin film may include polyolefin and/or the like, for example. The resin film may include at least one selected from the group consisting of polyethylene (PE) and polypropylene (PP), for example. The base material may have a monolayer structure, for example. The base material may consist essentially of a PE layer. The base material may have a multilayer structure, for example. The base material may be formed by stacking a PP layer, a PE layer, and a PP layer in this order, for example. The resin film may have a thickness from 3 to 50 µm, for example, or may have a thickness from 3 to 30 µm, or may have a thickness from 5 to 15 µm.

The separator has an adhesive layer on one side or both sides of the base material. The adhesive layer is capable of bonding at least one of the positive electrode plate and the negative electrode plate with the separator (the base material) by the action of, for example, press molding. The adhesive layer includes an adhesion resin. The glass transition point of the adhesion resin may be higher than 35°C, for example, and may be 40°C or higher, or 50°C or higher. The glass transition point of the adhesion resin may be 70°C or lower, or 60°C or lower, for example, and may be 80°C or lower. Examples of the adhesion resin include resin particles of a fluorine-based resin, an acrylic-based resin, a urethane resin, an ethylene vinyl acetate resin, an epoxy resin, and/or the like. Examples of the fluorine-based resin include polyvinylidene difluoride (PVdF), polytetrafluoroethylene (PTFE), and the like.

The separator can further comprise a heat-resistant layer. The heat-resistant layer can function to reduce shrinkage of the separator that can be caused by heat during charging and discharging of the battery. The heat-resistant layer can include inorganic particles and a binder, for example. Examples of the inorganic particles include ceramic particles of alumina, boehmite, aluminum hydroxide, silica, titania, and the like. As the binder, the resin materials described above as a constituent material of the adhesive layer can be used as appropriate. In the heat-resistant layer, the mixing proportion of the inorganic particles and the binder (mass ratio) is preferably from 98:2 to 50:50, more preferably from 95:5 to 70:30. The thickness of the heat-resistant layer may be from I to 10 µm, for example, and may be from 1 to 5 µm. The heat-resistant layer may be provided on one side or both sides of the base material. Preferably, the heat-resistant layer is provided on a side of the separator that faces the positive electrode plate. When the separator comprises a heat-resistant layer, it may be provided directly on the base material, or may be interposed between the base material and the adhesive layer.

### <Electrode Assembly for Non-Aqueous Electrolyte Secondary Battery>

An electrode assembly according to the present disclosure comprises a positive electrode plate, a separator, and a negative electrode plate. The electrode assembly may be wound-type electrode assembly 50 illustrated in Fig. 5. The electrode assembly may be stack-type electrode assembly 50 illustrated in Fig. 6. To the positive electrode plate, the separator, and the negative electrode plate, the above description applies.

At least one of the positive electrode plate and the negative electrode plate is placed in contact with the adhesive layer. The adhesion force between the base material and at least one of the positive electrode plate and the negative electrode plate placed in contact with the adhesive layer may be from 0.2 to 5.0 kN/m, for example. With the adhesion force falling within the above-mentioned range, electrode assembly formability as well as liquid-injection characteristics and liquid-impregnation characteristics of non-aqueous electrolyte solution tend to be achieved. The adhesion force is measured by an adhesion force measurement method that is described below in the Examples section. From the viewpoints of electrode assembly formability as well as liquid-injection characteristics and liquid-impregnation characteristics of non-aqueous electrolyte solution, the adhesion force may be preferably from 0.5 to 5.0 kN/m.

When the base material includes the porous film, in the porous film, the difference between the porosity of a portion that faces both a positive electrode active material application part and a negative electrode active material application part (also called an electrode plate facing portion) and the porosity of a portion that does not face at least one of the positive electrode active material application part and the negative electrode active material application part (also called an electrode plate not-facing portion) (hereinafter, the difference is also called a pore decrement) can be 8.0% or less, for example. The pore decrement is determined by a method that is described below in the Examples section. From the viewpoint of liquid-injection characteristics and liquid-impregnation characteristics of non-aqueous electrolyte solution, the pore decrement is preferably 4.0% or less, more preferably 3.0% or less, and, for example, it may be 1.5% or more.

### <Non-Aqueous Electrolyte Secondary Battery>

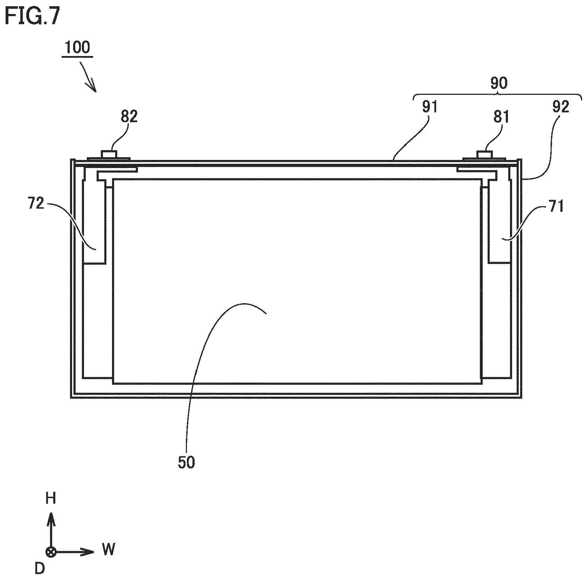

Fig. 7 is a schematic view illustrating an example configuration of a battery according to the present embodiment. A battery 100 may be used for any purpose of use. Battery 100 may be used as a main electric power supply or a motive force assisting electric power supply in an electric vehicle and/or the like. A plurality of batteries 100 may be connected together to form a battery module or a battery pack. Battery 100 may have a rated capacity from 1 to 300 Ah, for example.

Battery 100 includes electrode assembly 50 and a non-aqueous electrolyte solution (not illustrated). As illustrated in Fig. 1, battery 100 can further include an exterior package 90. Exterior package 90 accommodates electrode assembly 50 and the non-aqueous electrolyte solution. Exterior package 90 is prismatic (a flat, rectangular parallelepiped). Exterior package 90 may be made of aluminum (Al) alloy, for example. Electrode assembly 50 may be accommodated inside the exterior package 90, with pressure applied in the thickness direction (the D-axis direction in Fig. 7).

Exterior package 90 may include a sealing plate 91 and an exterior container 92, for example. Sealing plate 91 closes the opening of exterior container 92. Sealing plate 91 and exterior container 92 may be bonded together by laser processing and/or the like, for example. The configuration of exterior package 90 is not particularly limited. For example, exterior package 90 may be in the shape of a pouch. More specifically, exterior package 90 may be a pouch made of an Al-laminated film, and/or the like.

To sealing plate 91, a positive electrode terminal 81 and a negative electrode terminal 82 are provided. To sealing plate 91, an inlet (not illustrated), a gas-discharge valve (not illustrated), and/or the like may further be provided. Through the inlet, the non-aqueous electrolyte solution may be injected into exterior package 90. The inlet may be closed with a plug and/or the like, for example. Positive electrode terminal 81 is connected with electrode assembly 50 by a positive electrode current-collecting member 71. Positive electrode current-collecting member 71 may be an Al plate and/or the like, for example. Negative electrode terminal 82 is connected with electrode assembly 50 by a negative electrode current-collecting member 72. Negative electrode current-collecting member 72 may be a copper (Cu) plate and/or the like, for example.

Typically, as the non-aqueous electrolyte solution, a liquid that is made by dissolving or dispersing an electrolyte salt (in other words, a supporting salt) in a non-aqueous solvent is used. The non-aqueous solvent is not particularly limited, and various organic solvents such as carbonates, ethers, esters, nitriles, sulfones, and lactones that are used for an electrolyte solution of a typical lithium-ion secondary battery can be used. Carbonates are preferable among them, and specific examples thereof include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyldifluoromethyl carbonate (F-DMC), trifluorodimethyl carbonate (TFDMC), and the like. One type of these non-aqueous solvents may be used, or two or more types of them can be used in combination as appropriate.

As the electrolyte salt, a lithium salt such as LiPF₆, LiBF₄, and/or lithium bis(fluorosulfonyl)imide (LiFSI) can be used, for example, and, among them, LiPF₆ is preferable. The concentration of the electrolyte salt is not particularly limited, and it is preferably from 0.7 mol/L to 1.3 mol/L. As long as an effect of the present disclosure is not markedly impaired, the non-aqueous electrolyte solution may include a component other than the above-described components, such as, for example, various additives including a film-forming agent such as an oxalato complex, biphenyl (BP), a gas generation agent such as cyclohexylbenzene (CHB), a thickener, and the like.

### [Examples]

In the following, the present disclosure will be described in further detail by way of Examples. "%" and "part(s)" in Examples refer to mass% and part(s) by mass, respectively, unless otherwise specified.

### [Separator]

A separator was prepared, which included a heat-resistant layer on one side of a PE film and which also included an adhesive layer on each side of the film (that included an adhesion resin with a glass transition temperature of 35°C or more).

### [Adhesion Force Measurement Method]

The electrode assembly produced in Examples and Comparative Examples was cut into a size of 2 cm×7 cm. The adhesion force between the substrate and the positive electrode plate was measured by a method in conformity with JIS K6854-1, under the conditions of a strain rate of 50 mm/minute. When the adhesion force is 0.2 kN/m or more, it is judged that adhesion between the separator and the electrode plate is sufficiently ensured and the electrode assembly formability is good.

### [Adhesive Layer Area Ratio Evaluation Method]

The electrode assembly produced in Examples and Comparative Examples was disassembled, and the separator was separated. Subsequently, the separator was set on a platform of a microscope in such a manner that the surface whose adhesive covering rate was to be calculated faced upward, and examination was carried out under a magnification from 10 to 200. At this point, if the application/arrangement pattern of the adhesive was available, the magnification was adjusted so that at least one cycle was to be examined. Binarization processing was performed so that only the adhesive-covered position was distinguished within the examination area, and the adhesive layer area ratio was calculated.

### [Evaluation Method for Impregnation of Non-Aqueous Electrolyte Solution]

An end of the electrode assembly produced in Examples and Comparative Examples was immersed in a non-aqueous electrolyte solution in a tray, and taken out after a lapse of 6 hours. Subsequently, the electrode assembly thus being subjected to impregnation evaluation was disassembled, and the height to which the non-aqueous electrolyte solution permeated and reached from the immersed end was measured, followed by evaluation of impregnation of the non-aqueous electrolyte solution according to the criteria described below.
A: The height to which the non-aqueous electrolyte solution permeated was 9 cm or more.
B: The height to which the non-aqueous electrolyte solution permeated was not less than 6 cm and less than 9 cm.
C: The height to which the non-aqueous electrolyte solution permeated was not less than 3 cm and less than 6 cm.
D: The height to which the non-aqueous electrolyte solution permeated was less than 3 cm.

### [Evaluation Method for Pore Decrement]

The electrode assembly produced in Examples and Comparative Examples was disassembled, and the separator was taken out. The true density ρt of the base material of the separator at the electrode plate facing portion and the electrode plate not-facing portion, respectively, was determined by a gas replacement method. As the gas, He was used. With the use of the apparent density ρ that was calculated from the thickness, area, and weight of the separator, the porosity of the base material at the electrode plate facing portion and the electrode plate not-facing portion, respectively, was calculated by (1-ρ/ρt)×100. The pore decrement was calculated by (1-(porosity of electrode plate facing portion)/(porosity of electrode plate not-facing portion))× 100. When the pore decrement is 8.0% or less, it is judged that the pores remain to be present without collapsing due to pressing and the non-aqueous electrolyte solution has good liquid-injection characteristics and good liquid-impregnation characteristics.

### <Example 1>

The positive electrode plate and the negative electrode plate were stacked with the separator interposed therebetween, and thereby a stack was produced. The resulting stack was pressed at a pressing temperature of 25°C and a pressing pressure of 10 MPa for a pressing duration of 3 seconds, and thereby an electrode assembly was produced. The resulting electrode assembly was subjected to evaluation of the adhesion force between the electrode plate and the separator, the adhesive layer area ratio, the rate of impregnation, and the pore decrement. Results are shown in Table 1.

### <Examples 2 to 8 and Comparative Examples 1 to 8>

An electrode assembly was produced in the same manner as in Example 1 except that the pressing temperature, the pressing pressure, and the pressing duration specified in Table 1 were adopted and formation of the adhesive layer on the separator was carried out in such a manner that the adhesive surface covering rate became as specified in Table 1. Results are shown in Table 1.

**[Table 1]**

| | Pressing temperature (°C) | Pressing pressure (MPa) | Pressing duration (s) | Adhesive surface covering rate (%) | Adhesion force (kN/m) | Rate of impregnation | Pore decrement (%) |
|---|---|---|---|---|---|---|---|
| Comp. Ex. 1 | 100 | 3 | 60 | 10 | 1.9 | C | 8.3 |
| Comp. Ex. 2 | 100 | 3 | 60 | 30 | 5.5 | D | 8.2 |
| Comp. Ex. 3 | 100 | 3 | 60 | 50 | 8.2 | D | 8.0 |
| Comp. Ex. 4 | 25 | 3 | 3 | 10 | 0 | A | 0.97 |
| Comp. Ex. 5 | 25 | 3 | 3 | 30 | 0 | A | 1.1 |
| Comp. Ex. 6 | 25 | 3 | 3 | 50 | 0 | B | 1.1 |
| Ex. 1 | 25 | 10 | 3 | 10 | 0.24 | A | 2.2 |
| Ex. 2 | 25 | 10 | 3 | 30 | 0.77 | B | 2.1 |
| Ex. 3 | 25 | 10 | 3 | 50 | 1.0 | B | 2.0 |
| Ex. 4 | 25 | 10 | 3 | 70 | 1.4 | C | 2.0 |
| Comp. Ex. 7 | 25 | 20 | 3 | 80 | 1.6 | D | 2.1 |
| Ex. 5 | 25 | 20 | 3 | 10 | 0.61 | B | 3.8 |
| Ex. 6 | 25 | 20 | 3 | 30 | 1.8 | B | 3.9 |
| Ex. 7 | 25 | 20 | 3 | 50 | 3.4 | C | 3.8 |
| Ex. 8 | 25 | 20 | 3 | 70 | 4.8 | C | 3.7 |
| Comp. Ex. 8 | 25 | 20 | 3 | 80 | 6.1 | D | 3.7 |

Referring to Table 1, the electrode assembly obtained in each of Examples 1 to 8 according to the present disclosure had a sufficient adhesion force, a sufficient rate of impregnation of non-aqueous electrolyte solution, and a low pore decrement. Hence, it will be appreciated that the present disclosure makes it possible to provide an electrode assembly for a non-aqueous electrolyte secondary battery that can exhibit electrode assembly formability as well as liquid-injection characteristics and liquid-impregnation characteristics of electrolyte solution, and also to provide a method of producing the same.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. A method of producing an electrode assembly (50) for a non-aqueous electrolyte secondary battery, the method comprising:
a preparation step that involves preparing a positive electrode plate (10), a negative electrode plate (20), and a separator (30), in which the separator (30) comprises a base material and an adhesive layer, and the adhesive layer is placed on at least one side of the base material and includes an adhesion resin;
a stacking step that involves obtaining a stack (40) including the positive electrode plate (10), the separator (30), and the negative electrode plate (20), in which the adhesive layer of the separator (30) is placed in contact with at least one of the positive electrode plate (10) and the negative electrode plate (20); and
a pressing step that involves pressing the stack (40) at a temperature not higher than a glass transition point of the adhesion resin and at a pressure from 8 to 20 MPa to obtain an electrode assembly (50) for a non-aqueous electrolyte secondary battery, wherein
an area ratio of the adhesive layer to the base material in a plan view of the separator (30) is from 10 to 70%.

2. The method of producing an electrode assembly (50) for a non-aqueous electrolyte secondary battery according to claim 1, wherein the base material includes a porous film.

3. The method of producing an electrode assembly (50) for a non-aqueous electrolyte secondary battery according to claim 1or 2, wherein a temperature at which the stack (40) is pressed in the pressing step is from 15 to 35°C.

4. The method of producing an electrode assembly (50) for a non-aqueous electrolyte secondary battery according to any one of claims 1 to 3, wherein a duration for which the stack (40) is pressed in the pressing step is not less than 3 seconds and less than 30 seconds.

5. The method of producing an electrode assembly (50) for a non-aqueous electrolyte secondary battery according to any one of claims 1 to 4, wherein the separator (30) further comprises a heat-resistant layer, and in the stacking step, the separator (30) is placed in such a manner that a side thereof on which the heat-resistant layer is provided faces the positive electrode plate (10).

6. An electrode assembly (50) for a non-aqueous electrolyte secondary battery, the electrode assembly (50) comprising:
a positive electrode plate (10);
a separator (30); and
a negative electrode plate (20), wherein
the separator (30) comprises a base material and an adhesive layer, in which the base material includes a porous film, and the adhesive layer is placed on at least one side of the base material and includes an adhesion resin,
an area ratio of the adhesive layer to the base material in a plan view of the separator (30) is from 10 to 70%,
at least one of the positive electrode plate (10) and the negative electrode plate (20) is placed in contact with the adhesive layer,
an adhesion force between the base material and at least one of the positive electrode plate (10) and the negative electrode plate (20) placed in contact with the adhesive layer is from 0.2 to 5.0 kN/m, and
in the porous film, a difference between a porosity of a portion that faces both a positive electrode active material application part and a negative electrode active material application part and a porosity of a portion that does not face at least one of the positive electrode active material application part and the negative electrode active material application part is 8.0% or less.

7. The electrode assembly (50) for a non-aqueous electrolyte secondary battery according to claim 6, wherein a glass transition point of the adhesion resin is higher than 35°C.

8. The electrode assembly (50) for a non-aqueous electrolyte secondary battery according to claim 6 or 7, wherein
the separator (30) further comprises a heat-resistant layer, and
the separator (30) is placed in such a manner that a side thereof on which the heat-resistant layer is provided faces the positive electrode plate (10).

9. A non-aqueous electrolyte secondary battery (100) comprising the electrode assembly (50) for a non-aqueous electrolyte secondary battery according to any one of claims 6 to 8.
